# EUROPÄISCHE PATENTSCHRIFT

(11) **EP 1 596 094 B1**
(45) Veröffentlichungstag und Bekanntmachung des Hinweises auf die Patenterteilung: **07.02.2007**
(21) Anmeldenummer: 05010139.3
(22) Anmeldetag: 10.05.2005
(51) Int. Cl.: F16F 9/32

(54) **Verfahren zur Herstellung eines Kolbenventilteiles**
Manufacturing process of a piston with valves
Procédé de fabrication d'un piston à soupapes

(30) Priorität: 12.05.2004 DE 102004023465
(43) Veröffentlichungstag der Anmeldung: 16.11.2005
(73) Patentinhaber: Saxonia AG, 9548 Matzingen (CH)
(72) Erfinder: Stark, Frank, 8544 Sulz (CH)
(74) Vertreter: von Puttkamer, Nikolaus

(56) Entgegenhaltungen:
- DE-A1- 19 846 460
- US-A- 6 018 868

## Beschreibung

Die Erfindung bezieht sich auf ein Verfahren zur Herstellung eines Kolbenventilteiles gemäss dem Oberbegriff des Patentanspruchs 1.

In der DE 34 05 315 C2 ist ein regelbarer Stoßdämpfer für Kraftfahrzeuge beschrieben, bei dem ein derartiges Kolbenventilteil in einem mit einer Dämpfungsflüssigkeit gefüllten Zylinder angeordnet ist. Das Kolbenventilteil ist mit einer Kolbenstange verbunden und so angeordnet, dass es den Zylinderraum des Zylinders in zwei Arbeitsräume unterteilt. Die Dämpfungscharakteristiken eines Stoßdämpfers mit einem solchen Kolbenventilteil werden durch die in dem Kolbenventilteil vorgesehenen Durchgangskanäle und deren Abdichtung bei den jeweiligen Hüben des Kolbenventilteiles bestimmt .

Aus der DE 197 52 670 A1 geht ein Kolbenventilteil für einen Stoßdämpfer hervor, das einen Auflagering aufweist, dessen Auflagefläche mit der Ventilauflagefläche gegebenenfalls in einem Arbeitsgang auf eine vorbestimmte Höhe bearbeitet wird.

Aus der DE 198 46 460 C1 geht ein Verfahren zur Herstellung eines solchen scheibenförmigen Kolbenventilteiles für einen Stoßdämpfer hervor, das Durchgangskanäle aufweist, die durch Ventileinrichtungen öffen- und schließbar sind. Das Kolbenventil besitzt mittig eine Durchgangsöffnung, die durch Prägen und Stanzen des Kolbenventilteiles von einer Seite derart erzeugt wird, dass die Durchgangsöffnung an der anderen Seite des Kolbenventilteiles einen als Lagerbüchse über die andere Seite des Kolbenventilteiles vorstehenden Bereich aufweist. Erste Durchgangskanäle werden durch Stanzen und Prägen des Kolbenventilteiles von der einen Seite her erzeugt, derart, dass sie über die andere Seite des Kolbenventilteiles vorstehende ringförmige Vorsprünge bilden. Zweite Durchgangskanäle werden durch Präge- und Stanzschritte von der anderen Seite des Kolbenventilteiles her derart erzeugt, dass sie ringförmige Vorsprünge aufweisen, die über die eine Seite des Kolbenventilteiles hinausragen. In einer die Durchgangsöffnung der einen Seite umgebenden Vertiefung wird ein eine weitere Lagerbüchse bildendes Element so befestigt, dass es über die eine Seite des Kolbenventilteiles vorsteht. Die mit einer Ventileinrichtung zusammenwirkenden Endflächen der ringförmigen Vorsprünge der ersten Durchgangskanäle und die Endfläche der Lagerbüchse werden in einer Schleifoperation so geschliffen, dass sie in einer Ebene liegen. Die Endflächen des Elementes und die mit einer weiteren Ventileinrichtung zusammenwirkenden Endflächen der ringförmigen Vorsprünge der zweiten Durchgangskanäle werden in einer weiteren Schleifoperation so geschliffen, dass sie in einer Ebene liegen.

Die Aufgabe der vorliegenden Erfindung besteht darin, das zuvor beschriebene Verfahren zur Herstellung eines Kolbenventilteiles dahingehend zu verbessern, dass Kolbenventilteile vergleichsweise kostengünstig herstellbar sind, wobei die Funktion der Kolbenventilteile während ihrer Lebensdauer relativ wenig beeinträchtigt wird.

Diese Aufgabe wird durch ein Verfahren zur Herstellung eines Kolbenventilteiles mit den Merkmalen des Patentanspruches 1 gelöst.

Der wesentliche Vorteil des erfindungsgemäßen Verfahrens besteht darin, dass nach ihm Kolbenventilteile der aus der DE 198 46 460 C1 beschriebenen Art aus nur einem Ausgangsmaterial herstellbar sind. Eigene Elemente zur Bildung einer Lagerbüchse, die beim Stand der Technik in eigenen Herstellungsoperationen in einer entsprechenden, die Durchgangsöffnung des Kolbenventilteiles umgebenden Vertiefung angeordnet und befestigt werden müssen, sind vorteilhafter Weise bei dem erfindungsgemäßen Verfahren nicht erforderlich. Ein Hauptvorteil der vorliegenden Erfindung besteht darin, dass Probleme, die beim Stand der Technik darauf zurückzuführen sind, dass sich die aus einem eigenen Element hergestellte Lagerbüchse beim Gebrauch des Kolbenventilteiles setzt, wodurch die Funktion des Kolbenventilteiles beeinträchtigt wird, vermeidbar sind.

Ein weiterer wesentlicher Vorteil besteht darin, dass das erfindungsgemäße Verfahren vergleichsweise kostengünstig ist, weil die vorliegenden Kolbenventilteile aus ein und demselben Ausgangsmaterial herstellbar sind.

Da die Lagerbüchsen aus ein und dem selben Materialstreifen hergestellt sind, können ihre Auflageflächen vorteilhafter Weise größer und gleich groß wie die entsprechenden Flächen der bekannten Kolbenventilteile mit getrennten Lagerbüchsen, bei denen die als getrenntes Element ausgebildete Lagerbüchse eine kleinere Fläche besitzt.

Vorteilhafte Ausgestaltungen gehen aus den Unteransprüchen hervor.

Im folgenden werden die Erfindung und deren Ausgestaltungen im Zusammenhang mit den Figuren näher erläutert. Es zeigen:
Figur 1A, 1B eine Aufsicht von oben auf einen Materialstreifen, aus dem während der dargestellten Herstellungsschritte in zwei parallelen Reihen Kolbenventilteile nach dem vorliegenden Verfahren hergestellt werden;
Figur 2A, 2B einen Schnitt des Materialstreifens entlang der Linie II-II der Figuren 1A, 1B;
Figur 3 eine Detaildarstellung zum zweiten Verfahrensschritt, bei dem der Materialstreifen von gleichzeitig oben und unten vorgeprägt wird;
Figur 4 eine Detaildarstellung zum dritten Verfahrensschritt, bei dem der Materialstreifen gleichzeitig von oben und unten geprägt wird;
Figur 5 einen Schnitt durch das nach dem erfindungsgemäßen Verfahren hergestellte Kolbenventilteil.

Zu der Erfindung führten die folgenden Überlegungen.

Um Kolbenventilteile herstellen zu können, die eine besonders gute und über lange Zeiträume unveränderbare Funktion besitzen, wurde erstmals der Gedanke gefasst, diese Kolbenventilteile aus einem einzigen Ausgangsmaterialteil einstückig herzustellen. Hierbei werden nach dem erfindungsgemäßen Verfahren in einem Materialstreifen Freischnittbereiche derart eingebracht, dass Material des Materialstreifens in einem Bereich, aus dem ein Kolbenventilteil herzustellen ist, bei einer Prägeoperation, bei der der Bereich gleichzeitig von oben und von unten her durch Prägestempel beaufschlagt wird, in den Bereich der Freischnitte unter einer gleichzeitigen Verjüngung der Dicke des Materialstreifens nach allen Richtungen fließen kann, wobei bei dieser Prägeoperation von beiden Seiten her gleichzeitig die erhöhten Bereiche der Lagerbüchsen erzeugt werden. Zur Vorbereitung auf den genannten Prägeschritt werden in einem vorangehenden Vorprägeschritt gleichzeitig von oben und unten die Lagerbüchsenbereiche vorgeprägt. Erstmals kann auf diese Weise ein Kolbenventil aus ein und demselben Materialstreifen hergestellt werden, das folglich aus nur einem einzigen Materialstück besteht. Problematische Veränderungen des Kolbenventilteiles beim Gebrauch, wie sie beispielsweise beim bekannten Kolbenventilteil der eingangs genannten Art auftreten können und die insbesondere auf ein Setzen der Lagerbüchse, die als selbständiges Element an dem Kolbenventilteil befestigt ist, zurückzuführen sind, können bei der vorliegenden Erfindung vorteilhafter Weise vermieden werden. Ein solches Setzen erfolgt beispielsweise bei Temperatureinwirkungen auf die unterschiedlichen Materialteile, nämlich auf die am Kolbenventil befestigte Lagerbüchse und auf das restliche Kolbenventilteil. Dichtungsprobleme können die Folge sein. Änderungen des Dämpfungsverhaltens sind daher bei den nach dem erfindungsgemäßen Verfahren hergestellten Kolbenventilteilen vorteilhafter Weise nicht zu erwarten.

Bezüglich der Funktion und Anordnung des nach dem erfindungsgemäßen Verfahrens hergestellten Kolbenventilteiles in einem Stoßdämpfer wird auf die bereits genannte DE 198 46 460 C2 verwiesen.

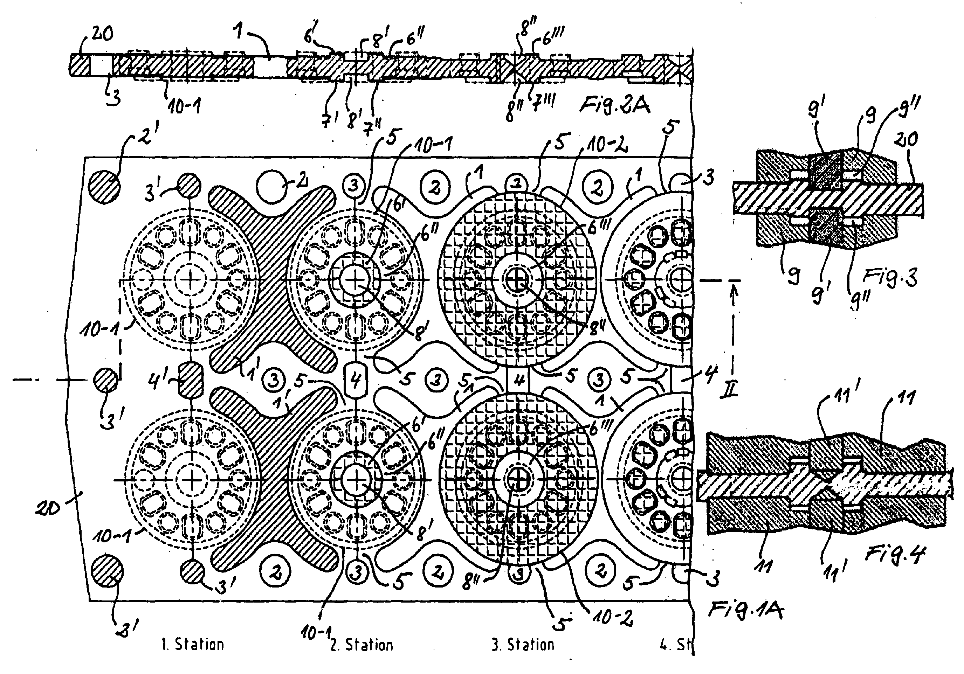

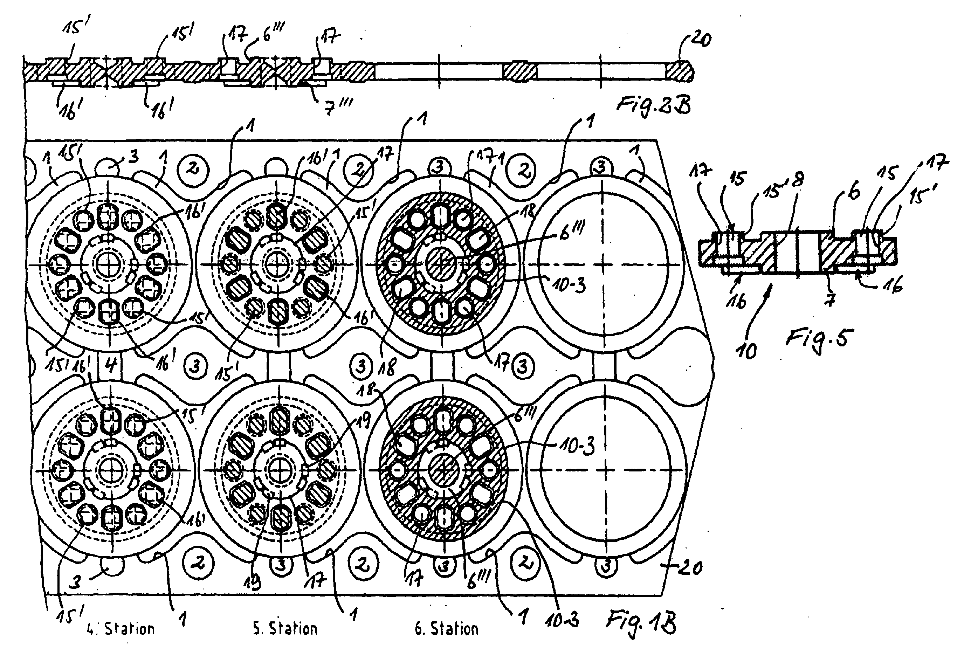

Gemäß Figur 1 A, B wird beim erfindungsgemäßen Verfahren in einem ersten Verfahrensschritt, der in einer ersten Station ausgeführt wird, ein freizuschneidender Bereich 1' zur Erzeugung eines Freischnittes 1 durch eine Stanzoperation aus dem Materialstreifen 20 ausgestanzt. Gleichzeitig werden Bereiche 2', 3' und 4' zur Erzeugung von Pilot- und Vorschublöchern 2, 3, 4 ausgestanzt, die vorzugsweise am Außenrand (Bereiche 2' und 3') und bei der zweireihigen Herstellung von Kolbenventilteilen in der Mitte (Bereiche 3', 4') zwischen den beiden Kolbenventilreihen ausgestanzt werden. Diese Pilot- und Vorschublöcher dienen der Bewegung des Materialstreifens 20 und der Justierung desselben während seiner Bewegung bei den Herstellungsschritten in den einzelnen Stationen.

Die freizuschneidenden Bereiche 1' werden dabei so gewählt und gestaltet, dass jeweils zwei erzeugte, benachbarte Freischnitte 1 jeweils einen Bereich 10-1, aus dm nachfolgend ein Kolbenventilteil 10 hergestellt wird, in der Bewegungsrichtung des Materialstreifens 20 gesehen vorzugsweise halbkreisförmig umgeben, wobei sich quer zur Bewegungsrichtung des Materialstreifens 20 gegenüberliegend Stegbereiche 5 verbleiben, über die die Bereiche 10-1 etc. der aus dem Materialstreifen 20 herzustellenden Kolbenventilteile 10 mit dem restlichen Materialstreifen 20 verbunden bleiben. Da der Materialstreifen 20 fortlaufend mit den genannten Freischnitten 1 in der ersten Station versehen wird, sind die Bereiche 10-1, aus denen die Kolbenventilteile 10 herzustellen sind, ab der zweiten Station bereits beidseitig von den genannten halbkreisförmigen Freischnitten 1 umgeben. Es spielt dabei eine Rolle, dass die Freischnitte 1 so groß bemessen und geformt werden, dass sie spätere Materialflüsse der Bereiche 10-1, aus denen nachfolgend die Kolbenventilteile 10 herzustellen sind, beim Prägen dieser Bereiche zulassen und aufnehmen können. Dies wird später näher erläutert.

In der zweiten Station erfolgt zunächst ein gleichzeitiges Vorprägen des oberen und unteren Lagerbüchsenbereiches 6' bzw. 7', wobei der den Lagerbüchsenbereich 6', 7' jeweils umgebende Bereich 6'', 7" und der Bereich 8', in dem später die mittige Lagerbüchsenöffnung 8 der Lagerbüchsen 6, 7 hergestellt wird, gleichzeitig von oben und von unten vorgeprägt, d. h. also verdichtet werden, derart, dass dabei verdrängtes Material in den Lagerbüchsenbereich 6', 7' fließt. Die Folge ist, dass das Material des Materialstreifens 20 jeweils in dem Lagerbüchsenbereich 6', 7' verdichtet wird und die Lagerbüchsenbereiche 6', 7' jeweils erhöht werden. Beim Verdichten wird die Festigkeit des Materials erhöht.

Zum Vorprägen werden, wie dies die Figur 3 im Detail zeigt, ein oberer und ein unterer Stempel 9 verwendet, die bereits die Außen- und Innenkonturen der später herzustellenden Lagerbüchsenteile 6"', 7''' der Lagerbüchsen 6, 7 umfassen und jeweils ein Vorpräge-Dornteil 9' aufweisen, das das Material im Bereich 8' der späteren Lagerbüchsenöffnung 8 des fertigen Kolbenventilteiles 10 zur erwähnten Materialverdichtung vorprägt. Die Stempel 9 weisen jeweils einen das Vorpräge-Dornteil 9' umgebenden ringförmigen Raum 9" auf, der den Lagerbüchsenteilen 6"', 7''' in radialer Richtung entspricht und in den, wie oben erwähnt das beim Vorprägen verformte Material "einfließen" kann.

Vorzugsweise besitzen die Vorpräge-Dornteile 9' jeweils eine ebene Stirnfläche, damit aus dem beaufschlagten Bereich der späteren Lagerbüchsenöffnung 8 möglichst viel Material verdrängt und verdichtet wird.

Im dritten Schritt wird nun in der dritten Station mit der Hilfe von Prägestempeln 11 gemäß Figur 4 der gesamte Bereich 10-1, aus dem nachfolgend das Kolbenventilteil 10 hergestellt wird, gleichzeitig von oben und unten geprägt, wobei das Material des Bereiches 10-1 auf die Dicke des herzustellenden Kolbenventilteiles 10 verjüngt wird. Die Prägestempel 11 sind komplementär zu dem herzustellenden Lagerbüchsenteil 6 ausgebildet und weisen im Bereich der herzustellenden Lagerbüchsenöffnung 8 Dornteile 11' auf, die vorzugsweise eine spitz zulaufende Form besitzen, um ein besonders gutes Eindringen in den Materialstreifen 20 und dabei die gewünschte weitere Material-Verdrängung (Bereiche 8'') sicherzustellen. Beim dritten Schritt werden die Lagerbüchsenteile 6"', 7''' der späteren Lagerbüchsen 6, 7 gleichzeitig derart ausgeprägt, dass diese aus ihnen in voller Höhe hergestellt werden können.

Es ist aus den Figuren 1A und 2A erkennbar, dass das Material des Bereiches 10-1 beim Prägen und Verjüngen in der dritten Station radial nach außen in den Bereich der Freischnitte 1 fließt, wobei der flächenmäßig vergrößerte Bereich 10-2 entsteht, der bereits die Fläche des fertigen Kolbenventilteiles 10 besitzt. Das geprägte Material wird über der gesamten Fläche des herzustellenden Kolbenventilteiles 10 gleichmäßig verdichtet, wobei die Festigkeit gleichmäßig erhöht wird. Die gleichbleibende Ebenheit des Kolbenventilteiles 10 wird dabei sichergestellt.

Durch das gleichzeitige Vor- und Nachprägen an beiden Seiten des Materialstreifens 20 wird sichergestellt, dass die beidseitigen Lagerbüchsenteile 6'" und 7''' sowie die daraus hergestellten Lagerbüchsen 6, 7 insbesondere im Hinblick auf die Materialverdichtung und -beschaffenheit völlig identisch sind.

Beim vierten Schritt können die aus den Figuren 1A, B ersichtlichen Aussparungen 19 beidseitig mitgeprägt werden, in denen bei der Montage des Kolbenventilteiles 10 Tellerfedern verdrehsicher befestigt werden, die gegen Abdeckscheiben drücken, die auf den Endflächen der Vorsprünge der Durchgangskanäle 15, 16 sowie der Lagerbüchsenteile 6"', 7'" aufliegen.

Die nachfolgenden Schritte sind an sich bekannt und in der DE 198 46 460 C2 näher erläutert. Beim vierten Schritt wird in der vierten Station der vergrößerte Bereich 10-2 gleichzeitig von beiden Seiten her mit der Hilfe von Prägewerkzeugen (nicht dargestellt) so geprägt, dass auf jeder Seite den späteren Durchgangskanälen 15, 16 des Kolbenventilteiles 10 (Figur 5) entsprechende Materialvorsprünge 15', 16' entstehen.

Nach dem Bewegen des Materialstreifens 20 zur fünften Station werden in einem fünften Verfahrensschritt mit der Hilfe von Stanz- bzw. Lochwerkzeugen (nicht dargestellt) die Durchgangskanäle 15, 16 durch Durchstanzen der in der vierten Station erzeugten Materialvorsprünge 15', 16' erzeugt bzw. geöffnet. Dabei entstehen die Durchgangsöffnungen 17 bzw. 18. Die Durchgangsöffnungen 17 werden dabei von der einen Seite des Materialstreifens 20 und die Durchgangsöffnungen 18 gleichzeitig von der anderen Seite her gestanzt.

In der sechsten Station wird beim sechsten Verfahrensschritt schließlich die Lagerbüchsenöffnung 8 der Lagerbüchsen 6, 7 durch mittiges Durchstanzen des vergrößerten Bereiches 10-2 und der Lagerbüchsenteile 6''', 7''' von einer Seite des Materialstreifens 20 her erzeugt. Gleichzeitig wird das gesamte Kolbenventilteil 10 entlang seiner Umfangslinie 10-3 aus dem Materialstreifen 20 ausgestanzt. Das Kolbenventilteil 10 (Figur 5) steht nun als sogenanntes Masseteil zur weiteren Bearbeitung zur Verfügung, wobei seine Handhabung zunächst im Hinblick auf Beschädigungen durch Stöße etc. unkritisch ist.

In einem weiteren Bearbeitungsschritt wird das Kolbenventilteil 10 zur Entfernung von vorhandenen Graten, die beim Stanzen und Prägen entstanden sind vorzugsweise in einer handelsüblichen Fliehkraftschleifmaschine durch Gleitschleifen behandelt. Dabei sind in der Fliehkraftmaschine ein entsprechendes Schleifkorn und eine Flüssigkeit vorhanden.

Im einem nachfolgenden Schritt können, falls dies für sinnvoll erachtet wird, durch Einsatzhärten die über die Seiten des Kolbenventilteiles 10 jeweils hinausragenden Vorsprünge der Durchgangskanäle 15, 16 gehärtet werden. Dies erfolgt dann, wenn eine Beeinflussung der Dämpfungsfunktion des Kolbenventilteiles 10 durch späteres Einbringen von Einkerbungen in die Stirnflächen der genannten Vorsprünge nicht erfolgen soll.

Anschließend wird das Kolbenventilteil 10 in einer Feinschleifmaschine beidseitig von oben und unten noch in der Form als unkritisch handzuhabendes Masseteil fein geschliffen. Dabei werden die Endflächen der genannten Vorsprünge, und die Endflächen der Lagerbüchsenteile 6 hergestellt, wobei absolut sichergestellt ist, dass alle genannten Endflächen jeder Seite des Kolbenventilteiles 10 jeweils in einer Ebene liegen.

Ferner wird das so beschaffene Kolbenventilteil 10 abschließend durch Strahlen oder Bürsten entgratet. Dabei muss das Kolbenventilteil 10 sehr sorgfältig behandelt werden, damit die genannten Endflächen nicht beschädigt werden.

Es wird darauf hingewiesen, dass bei den nach dem erfindungsgemäßen Verfahren hergestellten Kolbenventilteilen 10 beide Lagerbüchsenteile 6 vollständig identisch ausgebildet sind und insbesondere völlig gleiche Auflageflächen für die Ventil-Abdeckscheiben besitzen. Zudem können diese Auflageflächen größer sein als die entsprechende Auflagefläche des bei dem bekannten Kolbenventilteil eingesetzten Lagerbüchsenteiles.

Der Materialstreifen 20 besteht vorzugsweise aus einem Stahlmaterial.

## Patentansprüche

1. Verfahren zur Herstellung eines Kolbenventilteiles für Stoßdämpfer mit einem scheibenförmigen Teil, das in einem Zylinder eines Stoßdämpfers anordenbar ist und Durchgangskanäle aufweist, die durch Ventileinrichtungen öffen- und schließbar sind, wobei das Teil mittig Lagerbüchsen (6, 7) mit einer Lagerbüchsenöffnung (8) besitzt, in die ein Ansatz einer Kolbenstange des Stoßdämpfers zur Befestigung des Kolbenventilteiles (10) an der Kolbenstange einsetzbar ist, wobei das Kolbenventilteil (10) aus einem Materialstreifen (20) in verschiedenen Stationen hergestellt wird, **gekennzeichnet durch** die folgenden Verfahrensschritte:
a) Aus dem Materialstreifen (20) wird in einer ersten Station ein freizuschneidender Bereich (1') zur Erzeugung eines Freischnittes (1) in der ersten Station ausgestanzt, wobei der Freischnitt (1) so ausgebildet wird, dass nach dem Bewegen des Materialstreifens (20) zu einer nachfolgenden zweiten Station und dem Einbringen des nächstfolgenden Freischnittes (1) in der ersten Station in der Bewegungsrichtung des Materialstreifens (20) gesehen die beiden benachbarten Freischnitte (1) einen Bereich (10-1) des Materialstreifens (20), aus dem nachfolgend ein Kolbenventilteil (10) hergestellt wird, peripher umgeben, wobei der Bereich (10-1), aus dem nachfolgend ein Kolbenventilteil (10) hergestellt wird, über wenigstens einen Stegbereich (5) mit dem Materialstreifen (20) verbunden bleibt.
b) Gleichzeitiges Herstellen im Bereich (10-1), aus dem nachfolgend ein Kolbenventilteil (10) hergestellt wird, eines oberen und unteren Lagerbüchsenbereiches (6', 7') durch Materialverdrängung in einem Vorprägeschritt in der zweiten Station, wobei die die Lagerbüchsenbereiche (6', 7') jeweils innen und außen umgebenden Bereiche (6", 7") gleichzeitig von oben und unten geprägt werden.
c) Gleichzeitiges Prägen des gesamten Bereiches (10-1), aus dem nachfolgend ein Kolbenventilteil (10) hergestellt wird, von oben und unten in einer dritten Station, derart, dass das Material des Bereiches (10-1), aus dem nachfolgend das Kolbenventilteil (10) hergestellt wird, auf die Dicke des herzustellenden Kolbenventilteiles (10) verjüngt wird, wobei beim Prägen und Verjüngen Material des Bereiches (10-1), aus dem nachfolgend ein Kolbenventilteil (10) hergestellt wird, jeweils radial nach außen in die diesen Bereich (10-1) umgebenden Freischnitte (1) fließt, wobei ein vergrößerter Bereich (10-2) entsteht, und wobei die in der zweiten Station vorgeprägten Lagerbüchsenbereiche (6', 7') zu den Lagerbüchsenteilen (6"', 7"') ausgeprägt werden.
d) Gleichzeitiges Prägen des vergrößerten Bereiches (10-2) von oben und unten, derart, dass auf jeder Seite den späteren Durchgangskanälen (15, 16) des Kolbenventilteiles (10) entsprechende Materialvorsprünge (15', 16') entstehen, in einer vierten Station.
e) Durchstanzen der in der vierten Station erzeugten Materialvorsprünge (15', 16') zur Herstellung der Durchgangskanäle (15, 16) in einer fünften Station.
f) Mittiges Durchstanzen der Lagerbüchsenteile (6"', 7"') von einer Seite des Materialstreifens (20) her zur Erzeugung der Lagerbüchsenöffnung (8) der Lagerbüchsen (6, 7) in einer sechsten Station und gleichzeitiges Ausstanzen des gesamten Kolbenventilteiles (10) entlang seiner Umfangslinie (10-3) aus dem Materialstreifen (20).

2. Verfahren nach Anspruch 1, **dadurch gekennzeichnet, dass** der Bereich (10-1), aus dem nachfolgend ein Kolbenventilteil (10) hergestellt wird, kreisförmig beschaffen ist, dass jeweils zwei Freischnitte (1) in der Bewegungsrichtung gesehen einen Bereich (10-1), aus dem nachfolgend ein Kolbenventilteil (10) hergestellt wird, etwa halbkreisförmig umgeben, wobei vorzugsweise quer zur Bewegungsrichtung sich gegenüberliegend zwei Stegteile (5) verbleiben.

3. Verfahren nach Anspruch 1 oder 2, **dadurch gekennzeichnet, dass** in der ersten Station Bereiche (2', 3', 4') zur Erzeugung von Pilot- und/oder Vorschublöchern (2, 3, 4) aus dem Materialstreifen (20) ausgestanzt werden, die der Bewegung des Materialstreifens (20) und der Justierung desselben während seiner Bewegung dienen.

4. Verfahren nach einem der Ansprüche 1 bis 3, **dadurch gekennzeichnet, dass** das Vorprägen des oberen und unteren Lagerbüchsenbereiches (6', 7') in der zweiten Station mit der Hilfe eines oberen und eines unteren Stempels (9) erfolgt, die die Außen- und Innenkonturen der später herzustellenden Lagerbüchsenteile (6"', 7"') umfassen und jeweils ein Vorpräge-Dornteil (9') besitzen, das das Material im Bereich der späteren Lagerbüchsenöffnung (8) des fertigen Kolbenventilteiles (10) vorprägt, und einen das Vorpräge-Dornteil (9') umgebenden ringförmigen Raum (9") aufweisen, der den Lagerbüchsenteilen (6"', 7"') in radialer Richtung entspricht und in den das beim Vorprägen verformte Material einfließen kann.

5. Verfahren nach einem der Ansprüche 1 bis 4, **dadurch gekennzeichnet, dass** in der dritten Station Prägestempel (11) verwendet werden, die komplementär zu den herzustellenden Lagerbüchsenteilen (6"', 7"') ausgebildet sind und im Bereich der herzustellenden Lagerbüchsenöffnung (8) Dornteile (11') aufweisen, die die erforderliche Materialverdrängung zur Herstellung der Lagerbüchsenteile (6"', 7"') sicherstellen.

6. Verfahren nach Anspruch 5, **dadurch gekennzeichnet, dass** die Dornteile (11') eine spitz zulaufende Form besitzen.

7. Verfahren nach einem der Ansprüche 1 bis 6, **dadurch gekennzeichnet, dass** das Kolbenventilteil (10) nach dem in der sechsten Station ausgeführten Verfahrensschritt zur Entfernung von vorhandenen Graten durch Gleitschleifen behandelt wird.

8. Verfahren nach Anspruch 7, **dadurch gekennzeichnet, dass** das Gleitschleifen mit einer Fliehkraft-Schleifmaschine ausgeführt wird, die ein entsprechendes Schleifkorn und eine Flüssigkeit enthält.

9. Verfahren nach Anspruch 7 oder 8, **dadurch gekennzeichnet, dass** die über die Seiten des Kolbenventilteiles (10) jeweils hinausragenden Vorsprünge der Durchgangskanäle (15, 16) gehärtet werden.

10. Verfahren nach einem der Ansprüche 7 bis 9, **dadurch gekennzeichnet, dass** das Kolbenventilteil (10) nach dem Gleitschleifen bzw. nach dem Härten feingeschliffen wird, so dass die Endflächen der Vorsprünge der Durchgangskanäle (15, 16) und die Endflächen der Lagerbüchsenteile (6) auf jeder Seite des Kolbenventilteiles (10) jeweils in einer Ebene liegen.

11. Verfahren nach einem der Ansprüche 7 bis 10, **dadurch gekennzeichnet, dass** das Kolbenventilteil (10) abschließend durch Strahlen oder Bürsten entgratet wird.

12. Verfahren nach einem der Ansprüche 1 bis 11, **dadurch gekennzeichnet, dass** in dem Materialstreifen gleichzeitig quer zur Bewegungsrichtung nebeneinander mehrere Kolbenventilteile (10) hergestellt werden.

13. Verfahren nach einem der Ansprüche 1 bis 12, **dadurch gekennzeichnet, dass** gleichzeitig mit dem Prägeschritt der dritten Station im Randbereich der Lagerbüchsenteile (6"', 7"') beidseitig jeweils Aussparungen (19) erzeugt werden, in die bei der Montage des fertigen Kolbenventilteiles (10) Federn verdrehsicher zum Eingriff gebracht werden.

## Claims

1. A method for manufacturing a piston valve part for shock absorbers, comprising a discoidal part that can be disposed in a cylinder of a shock absorber and comprises through-channels that can be opened and closed by valve devices,
the part centrally having bearing bushes (6, 7) with a bearing bush opening (8) into which a lug of a piston rod of the shock absorber can be inserted to fasten the piston valve part (10) to the piston rod, the piston valve part (10) being produced from a strip of material in various stations,
**characterised by** the following method steps:
a) A region to be cut free (1') is stamped from the strip of material (20) in a first station to produce a free section (1) in the first station, the free section (1) being formed so that after the strip of material (20) has been moved to a following second station and the next free section (1) has been inserted in the first station, seen in the direction of movement of the strip of material (20), the two proximate free sections (1) surround a region (10-1) of the strip of material (20) from which a piston valve part (10) is subsequently produced, the region (10-1) from which a piston valve part is subsequently produced remaining connected to the strip of material (20) via at least one web region (5).
b) Simultaneously producing, in a region (10-1) from which a piston valve part (10) is subsequently produced, an upper and lower bearing bush region (6', 7') by material displacement in a pre-stamping step in the second station, the regions (6", 7") in each case surrounding the bearing bush regions (6', 7') on the inside and outside being simultaneously stamped from above and below.
c) Simultaneously stamping the entire region (10-1) from which a piston valve part (10) is subsequently produced from above and below in a third station in such a manner that the material of the region (10-1) from which the piston valve part (10) is subsequently produced is reduced to the thickness of the piston valve part (10) to be produced, whereby, during the stamping and reduction steps, material of the region (10-1) from which a piston valve part (10) is subsequently produced flows in each case radially outwardly into the frees sections (1) surrounding this region (10-1), whereby an enlarged region (10-2) is produced, and whereby the bearing bush regions (6, 7') pre-stamped in the second station are stamped out to produce the bearing bush parts (6"', 7"').
d) Simultaneously stamping the enlarged region (10-2) from above and below in such a manner that on every side material projections (15', 16') corresponding to the subsequent through-channels (15, 16) of the piston valve part (10) are produced in a fourth station.
e) Punching through the material projections (15', 16') produced in the fourth station to produce the through-channels (15, 16) in a fifth station.
f) Centrally stamping through the bearing bush parts (6"', 7"') from one side of the strip of material (20) to produce the bearing bush opening (8) of the bearing bushes (6, 7) in a sixth station and simultaneously stamping the entire piston valve part (10) along its circumferential line (10-3) out of the strip of material (20).

2. A method according to Claim 1,
**characterised in that** the region (10-1) from which a piston valve part (10) is subsequently produced has a circular shape,
**in that** two free sections (1), seen in the direction of movement, in each case surround, in a rough semi-circle, a region (10-1) from which a piston valve part (10) is subsequently produced, with two opposite web parts (5) preferably remaining at right angles to the direction of movement.

3. A method according to Claim 1 or 2,
**characterised in that** in the first station regions (2', 3', 4') are stamped out of the strip of material (20) for producing pilot holes and/or feed holes (2, 3, 4) that serve to move the strip of material (20) and to adjust said strip of material during its movement.

4. A method according to one of Claims 1 to 3,
**characterised in that** the pre-stamping of the upper and lower bearing bush region (6', 7') in the second station is performed by means of an upper and a lower punch (9), which comprise the outer and inner contours of the bearing bush parts (6"', 7"') subsequently to be produced and in each case have a pre-stamping drift part (9') that pre-stamps the material in the vicinity of the subsequent bearing bush opening (8) of the finished piston valve part (10), and comprise an annular space (9") that surrounds the pre-stamping drift part (9') which corresponds to the bearing bush parts (6"', 7"') in the radial direction and into which the material deformed during pre-stamping can flow.

5. A method according to one of Claims 1 to 4,
**characterised in that** in the third station forming punches (11) are used, which are designed to complement the bearing bush parts (6''', 7''') to be produced and, in the region of the bearing bush opening (8) to be produced, comprise drift parts (11'), which ensure the required material displacement to produce the bearing bush parts (6"', 7''').

6. A method according to Claim 5,
**characterised in that** the drift parts (11') have a tapered shape.

7. A method according to one of Claims 1 to 6,
**characterised in that** the piston valve part (10) is treated by vibratory grinding after the process step performed in the sixth station for the removal of any burrs.

8. A method according to Claim 7 or 8,
**characterised in that** vibratory grinding is performed using a centrifugal force grinding machine that contains an appropriate abrasive grain and a liquid.

9. A method according to Claim 7 or 8,
**characterised in that** the projections of the through-channels (15, 16) protruding in each case beyond the sides of the piston valve part (10) are hardened.

10. A method according to one of Claims 7 to 9,
**characterised in that** the piston valve part (10) is precision-ground after vibratory grinding and after hardening respectively, so that the end surfaces of the projections of the through-channels (15, 16) and the end faces of the bearing bush parts (6) on each side of the piston valve part (10) in each case lie in one plane.

11. A method according to one of Claims 7 to 10,
**characterised in that** the piston valve part (10) is finally deburred by blasting or brushing.

12. A method according to one of Claims 1 to 11,
**characterised in that** several piston valve parts (10) are simultaneously produced next to each other in the strip of material (20) at right angles to the direction of movement.

13. A method according to one of Claims 1 to 12,
**characterised in that** recesses (19), into which springs come to engage in torsion-free manner when the finished piston valve part (10) is assembled, are produced simultaneously with the stamping step in the third station on either side of the edge region of the bearing bush parts (6''', 7'").

## Revendications

1. Procédé de fabrication d'un piston à soupape pour un amortisseur de chocs, qui comprend une partie en forme de disque qui peut être disposé dans le cylindre d'un amortisseur et présente des canaux de passage qui peuvent être ouverts ou fermés par des dispositifs de soupapes, ce piston possédant en son milieu des douilles de palier (6, 7) avec une ouverture de douille de palier (8) dans laquelle peut être engagé un appendice d'une tige de piston de l'amortisseur, afin de fixer sur cette tige le piston à soupape (10) qui est fabriqué à partir d'une bande de matière (20) dans différents postes, ce procédé étant **caractérisé par** les étapes suivantes :
a) dans le premier poste, à partir de la bande de matière (20), une zone (1') est découpée pour donner une découpe libre (1) constituée de manière qu'après déplacement de la bande de matière (20) jusqu'au deuxième poste suivant, et introduction de la découpe libre (1) suivante dans le premier poste, les deux découpes libres voisines selon la direction de déplacement de la bande de matière (20) enveloppent périphériquement une zone (10-1) de la bande de matière (20) à partir de laquelle sera fabriqué ensuite un piston à soupape (10), cette zone (10-1) restant reliée à la bande de matière (20) par au moins une zone à barrettes (5),
b) dans la zone (10-1) à partir de laquelle sera fabriqué ensuite un piston à soupape (10), sont produites en même temps une zone supérieure et une zone inférieure de douille de palier (6', 7') par compression de la matière dans une étape de pré-estampage réalisée au deuxième poste, les zones (6", 7") entourant intérieurement et extérieurement les zones de douille de palier (6', 7') étant estampées en même temps d'en haut et d'en bas,
c) dans un troisième poste, a lieu en même temps l'estampage d'en haut et d'en bas de toute la zone (10-1) à partir de laquelle sera fabriqué ensuite le piston à soupape (10), de manière que la matière de la zone (10-1) a son épaisseur réduite à celle du piston à soupape (10) à fabriquer et, pendant l'estampage et la réduction d'épaisseur, le matériau de la zone (10-1) à partir de laquelle sera fabriqué ensuite un piston à soupape (10), flue radialement dans les découpes libres (1) entourant cette zone (10-1) en créant ainsi une zone agrandie (10-2), les zones de douille de palier (6', 7') pré-estampées au deuxième poste étant estampées pour donner les parties de douille de palier (6"', 7"'),
d) dans un quatrième poste, a lieu en même temps l'estampage d'en haut et d'en bas de la zone agrandie (10-2) de manière à produire de chaque côté des canaux de passage à venir (15, 16) du piston à soupape, des saillies de matière correspondantes (15', 16'),
e) dans un cinquième poste, a lieu la découpe par estampage des saillies de matière (15', 16') produites au quatrième poste, pour fabriquer les canaux de passage (15, 16),
f) dans un sixième poste, a lieu au milieu des parties de douille de palier (6"', 7"') un estampage traversant effectué à partir d'un côté de la bande de matière (20) pour produire l'ouverture de douille de palier (8) des douilles de palier (6, 7), avec découpage en même temps de l'ensemble du piston à soupape (10) en le séparant le long de sa ligne périphérique (10-3) de la bande de matière (20).

2. Procédé selon la revendication 1, **caractérisé en ce que** la zone (10-1) à partir de laquelle va être fabriqué un piston à soupape (10) est circulaire, et chaque découpe libre (1) observée dans le sens de déplacement, entoure à peu près en demi-cercle une zone (10-1) à partir de laquelle va être fabriqué un piston à soupape (10), deux barrettes se faisant face subsistant de préférence perpendiculairement à la direction de déplacement.

3. Procédé selon la revendication 1 ou 2, **caractérisé en ce que** dans le premier poste, pour obtenir des trous de pilotage et/ou de coulissement (2, 3, 4), dans la bande de matière (20), a lieu le découpage de zones (2', 3', 4'), qui servent au déplacement de la bande de matière (20) et à l'ajustage de celle-ci pendant son déplacement.

4. Procédé selon une des revendications 1 à 3, **caractérisé en ce que** l'estampage préliminaire de la zone supérieure et de la zone inférieure de douille de palier (6', 7') a lieu au deuxième poste à l'aide d'un poinçon supérieur et d'un poinçon inférieur (9) qui entourent les contours extérieurs et intérieurs des parties de douille de palier (6"', 7"') à fabriquer ultérieurement et possèdent chacune une broche d'estampage préliminaire (9') qui estampe le matériau dans la zone de l'ouverture de douille de palier (8) à venir du piston à soupape fini, en présentant un espace annulaire qui entoure la broche d'estampage préliminaire (9') et qui correspond en direction radiale aux parties de douille de palier (6"', 7"') pour permettre à la matière déformée lors du pré-estampage de s'écouler dans cet espace.

5. Procédé selon une des revendications 1 à 4, **caractérisé en ce qu'**au troisième poste sont utilisés des poinçons d'estampage (11) dont la constitution est complémentaire de celle des parties de douille de palier (6"', 7"') à fabriquer, et présentent dans la zone de l'ouverture de douille de palier (8) à réaliser des parties de broche (11') qui garantissent la compression de la matière nécessaire à l'obtention des parties de douille de palier (6"', 7"').

6. Procédé selon la revendication 5, **caractérisé en ce que** les parties de broche (11') ont une forme en pointe.

7. Procédé selon une des revendications 1 à 6, **caractérisé en ce que** le piston à soupape (10), après l'étape de procédé réalisé au sixième poste, est traité par ponçage pour éliminer les bavures existantes.

8. Procédé selon la revendication 7, **caractérisé en ce que** le ponçage est réalisé au moyen d'une rectifieuse centrifuge qui contient un grain abrasif correspondant et un liquide.

9. Procédé selon la revendication 7 ou 8, **caractérisé en ce que** les saillies que présentent les canaux de passage (15, 16) sur les côtés du piston à soupape (10) sont durcies.

10. Procédé selon une des revendications 7 à 9, **caractérisé en ce que** le piston à soupape (10), après ponçage et après durcissement, subit un rodage faisant que les surfaces d'extrémité des saillies des canaux de passage (15, 16) et les surfaces d'extrémité des parties de douille de palier (6), sur chaque côté du piston à soupape (10) se trouvent dans un même plan.

11. Procédé selon une des revendications 7 à 10, **caractérisé en ce que** le piston à soupape (10) est pour finir ébavuré par des jets ou des brosses.

12. Procédé selon une des revendications 1 à 11, **caractérisé en ce que** dans la bande de matière sont fabriqués en même temps plusieurs pistons à soupape (10) disposés côte à côte perpendiculairement à la direction de déplacement de la bande.

13. Procédé selon une des revendications 1 à 12, **caractérisé en ce qu'**à l'étape d'estampage dans le troisième poste, sont produits en même temps, dans la zone marginale des parties de douille de palier (6"', 7"'), de chaque côté des évidements (19) dans lesquels, lors du montage du piston à soupape (10) fabriqué, sont introduits des ressorts de sécurisation contre la rotation.
